# EUROPEAN PATENT APPLICATION

(11) **EP 1 876 844 A2**
(43) Date of publication of application: **09.01.2008**
(21) Application number: 06027065.9
(22) Date of filing: 29.12.2006
(51) Int. Cl.: H04Q 7/30

(54) **Radio base station apparatus**

(30) Priority: 07.07.2006 JP 2006187432
(71) Applicant: Fujitsu Ltd., Kawasaki-shi, Kanagawa 211-8588 (JP)
(72) Inventor: Takada, Kenji Fujitsu Limited, Kawasaki-shi Kanagawa 211-8588 (JP)
(74) Representative: HOFFMANN EITLE

(57) **Abstract**

A radio base station apparatus includes a plurality of call processing controllers for call processing control, a supervision controller supervising the call processing controllers, and a system data memory storing system data necessary for restarting. Each call processing controller includes a plurality of function portions and a memory storing data necessary for restarting. One function portion in one call processing controller includes a reset type recorder recording either an overall radio base station reset, one call processing controller reset only, or one function portion reset in the one call processing controller. Depending on the above recorded reset type, the one function portion initiates by reading data necessary for restarting from the system data memory or the memory in the one call processing controller.

## Description

### CROSS-REFERENCE TO RELATED APPLICATIONS

This application is based upon and claims the benefit of priority from the prior Japanese Patent Application No.2006-187432, filed on July 7, 2006, the entire contents of which are incorporated herein by reference.

### BACKGROUND OF THE INVENTION

### 1. Field of the Invention

The present invention relates to radio base station apparatus constituting a radio communication system, and more specifically, radio base station apparatus having a call processing controller for each of a plurality of frequency bands and maintaining normal initiation at the time of restarting after a new call processing controller is installed additionally.

### 2. Description of the Related Art

The radio base station apparatus (hereafter referred to as "base station") constituting the radio communication system includes two controllers: a call processing control system for managing voice and data processing; and a maintenance and supervision control system for managing operation and maintenance of the base station concerned.

A controller in the call processing control system (hereafter referred to as call processing controller) and a controller in the maintenance and supervision control system (hereafter referred to as maintenance & supervision controller) are further configured of a plurality of function portions, respectively. In order to increase accommodation capacity of the base station, there has been proposed a configuration such that one base station includes a plurality of call processing controllers (for example, a configuration such that the call processing controllers are separately provided for a respective plurality of frequency bands).

Also, in the official gazette of the Japanese Unexamined Patent Publication No. 2001-77769, there has been disclosed a method of accumulating the operation information of apparatus, and at the time of starting apparatus operation or in the event of an apparatus fault, automatically performing setting by use of the above accumulated information when a unit is replaced.

Each function portion includes a board-type hardware unit (computer unit) for executing software processing by means of a CPU mounted thereon. The above board-type hardware unit is referred to as card. Each function portion may have either one of the following structures: a single configuration constituted of a single card without redundancy; a redundant configuration using a plurality of cards capable of being switched over; and a risk scattering configuration enabling load sharing over a plurality of cards. The call processing controller, as well as the maintenance & supervision controller, includes a hardware unit having mounted cards each corresponding to each of the plurality of function portions. The above hardware unit is referred to as shelf.

At the time of reset processing (system reset) of the overall base station, it is necessary to reset each of the plurality of function portions (cards) constituting each controller. When initiating the card, if each card is configured to start the initiation by reading a system data file from a system data memory prepared separately, a certain time is necessary for the initiation.

The reset processing in the base station may be performed by means of remote control as a recovery means in the event of a trouble. Or, in case of expanding a frequency band, the reset processing may be performed when a call processing controller corresponding to the expanded frequency band is additionally installed so as to reflect a new system data file, being downloaded from upper-level apparatus, upon the new call processing controller.

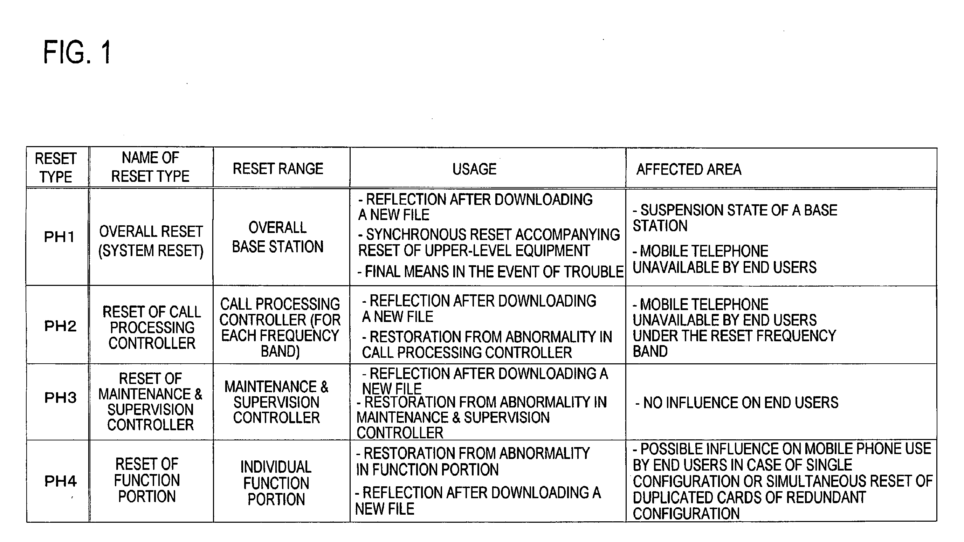

FIG. 1 shows a diagram illustrating reset patterns for a base station. As shown in FIG. 1, as the reset patterns, there may be considered four reset patterns: an apparatus reset for resetting the maintenance & supervision controller and the entire call processing controllers constituting the base station; a call processing controller reset for resetting on a basis of each call processing controller; a maintenance & supervision controller reset for resetting the maintenance & supervision controller only; and a function portion reset for resetting on a basis of each function portion constituting the maintenance & supervision controller or the call processing controller.

As to the cases of resetting the base station apparatus, it is assumed that the cases include: a reset when the base station downloads updated system data (new file) from upper-level apparatus so as to cause the entire controllers in the base station to correspond to the new file; a reset performed in synchronization with a reset in upper-level apparatus; and a reset as an ultimate means on the occurrence of a trouble in the base station apparatus. During the reset period of the apparatus, the base station suspends the operation, and the users cannot use the mobile phones.

As to the call processing controller reset, assumed cases include a case of resetting when a new file for dedicated use of one call processing controller is downloaded so as to cause the one call processing controller concerned to correspond to the new file; and a case of resetting in order to restore from fault occurrence of the one call processing controller. During the reset period of the call processing controller, the users using the frequency band handled by the one call processing controller concerned cannot use the mobile phones.

As to the maintenance & supervision controller reset, assumed cases include a case of resetting when a new file for dedicated use of the maintenance & supervision controller is downloaded so as to cause the call processing controller concerned to correspond to the new file; and a case of resetting in order to restore from fault occurrence in the call processing controller concerned. Even during the reset period of the maintenance & supervision controller, the users can use the mobile phones, because the period concerned does not affect call processing control.

As to the function portion reset, assumed cases include a case of resetting when there is performed the download of a new file for dedicated use of one function portion constituting the maintenance & supervision controller or the call processing controller, so as to cause the one function portion concerned to correspond to the new file; and a case of resetting in order to restore from fault occurrence in the one function portion concerned. During the period of the function portion reset, depending on the function of the one function portion being reset, the mobile phones may not be used by the users using the frequency band to be handled by one call processing controller including the function portion of interest, when resetting the one function portion in the call processing controller of single configuration, or when resetting the plurality of function portions of redundant configurations having the identical function.

In the conventional base station, a reset opportunity is restricted. Either the base station apparatus reset or the function portion reset is performed. Further, in the function portion reset, even in the case of a new file for dedicated use of the one function portion is downloaded, the reset has been performed by reading the entire system data including the new file. Also, conventionally, the reset on a controller-by-controller basis (namely, the reset on a basis of the call processing controller or the reset on a basis of the maintenance & supervision controller) has not been performed.

When the base station handles communication with a plurality of frequency bands, the base station includes a call processing controller for each frequency band. When operation with a new frequency band is added, a call processing controller corresponding to the frequency band concerned is additionally installed.

When the plurality of frequency bands are handled, the system data downloaded to the base station includes a proper data proper to each frequency band and a common data common to the entire frequency bands. When the function portion reset is performed, each function portion performs the reset by reading both the proper data corresponding to the self-frequency band and the common data.

However, before and after the additional installation of the call processing controller, the content of the common data is rewritten. Specifically, the common data includes an item for recognizing an ON/OFF state of operation of the call processing controller for each frequency band. For example, when only the call processing controller for an X frequency band has been ON (in operation) until that time, if a call processing controller for a Y frequency band is additionally installed, the common data is rewritten so as to indicate that the call processing controller for the X frequency band is ON, and the call processing controller for the Y frequency band is also ON.

After the common data is rewritten, when one function portion reads afresh both the common data and the proper data at the time of the function portion reset, there is a risk of different common data being read into each function portion of an identical call processing controller, which may impede normal call processing controller operation.

### SUMMARY OF THE INVENTION

Accordingly, it is an object of the present invention to provide radio base station apparatus enabling a normal reset of a call processing controller for handling a different frequency band, after the additional installation thereof.

As a first configuration of the radio base station apparatus according to the present invention to attain the aforementioned object, the radio base station apparatus includes: a plurality of call processing controllers performing call processing control; a supervision controller supervising the call processing controllers; and a system data memory storing system data necessary for restarting. The above each call processing controller further includes a plurality of function portions, and a memory storing data necessary for restarting the plurality of function portions. In the above radio base station apparatus, one function portion of one call processing controller includes a reset type recorder recording a reset type indicative of resetting the overall radio base station apparatus, or resetting only the one call processing controller, or resetting only the one function portion in the one call processing controller, and depending on the reset type recorded in the reset type recorder, the one function portion restarts by reading out necessary data for restarting from either the system data memory or the memory in the one call processing controller.

As a second configuration of the radio base station apparatus according to the present invention, in the above first configuration, the reset type recorder is not reset in any reset case.

As a third configuration of the radio base station apparatus according to the present invention, in the above first configuration, the memory in each call processing controller is not reset in any reset case.

As a fourth configuration of the radio base station apparatus according to the present invention, in the above first configuration, when the overall radio base station apparatus is reset, after the reset is performed, the one function portion reads out the necessary data for restarting from among the system data stored in the system data memory, and performs restarting, and the supervision controller reads out the necessary data for restarting the one function portion from among the system data stored in the system data memory, so as to transfer and store into the memory of the one call processing controller.

As a fifth configuration of the radio base station apparatus according to the present invention, in the above fourth configuration, the necessary data for restarting the one function portion are a common data common to each call processing controller and a proper data proper to the one call processing controller, among the system data stored in the system data memory.

As a sixth configuration of the radio base station apparatus according to the present invention, in the above fourth configuration, when resetting only the one call processing controller, the supervision controller reads out the necessary data for restarting the one call processing controller, from the system data stored in the system data memory, so as to transfer and store into the memory of the one call processing controller, and thereafter, each function portion in the one call processing controller reads out the data stored in the memory and performs restarting.

As a seventh configuration of the radio base station apparatus according to the present invention, in the above sixth configuration, the necessary data for restarting the one function portion are a common data common to each call processing controller and a proper data proper to the one call processing controller, among the system data stored in the system data memory.

As an eighth configuration of the radio base station apparatus according to the present invention, in the above first configuration, when resetting only the one function portion, the supervision controller reads out the necessary data for restarting the one function portion, from the system data stored in the system data memory, so as to transfer and store into the memory of the one call processing controller, and thereafter, the one function portion reads out the data stored in the memory and performs restarting.

As a ninth configuration of the radio base station apparatus according to the present invention, in the above eighth configuration, the necessary data for restarting the one function portion is a proper data proper to the one call processing controller among the system data stored in the system data memory.

According to the present invention, in resetting a call processing controller after the additional installation in radio base station apparatus, it is possible to reset on a stage-by-stage basis, such as overall reset, reset on a controller basis (simply referred to as controller reset), and reset of an individual function portion.

In particular, in the reset of the individual function portion, data mismatch among the plurality of function portions constituting the call processing controller is prevented, so as to guarantee normal initiation, and contribute to stable operation of the radio base station apparatus.

Also, by holding system data necessary for restarting in a memory of the call processing controller, normal initiation can be performed even when it is not possible to access a system data memory in the radio base station apparatus.

Further scopes and features of the present invention will become more apparent by the following description of the embodiments with the accompanied drawings.

### BRIEF DESCRIPTION OF THE DRAWINGS

FIG. 1 shows a diagram illustrating reset patterns for a base station.
FIG. 2 shows an exemplary structure of a base station according to the embodiment of the present invention.
FIG. 3 shows an exemplary structure of system data stored in a system data memory 10.
FIG. 4 shows a diagram illustrating reset control of a call processing controller 30.
FIG. 5 shows a diagram illustrating a reset cause indication register.
FIG. 6 shows a sequence diagram of a system reset according to the embodiment of the present invention.
FIG. 7 shows a sequence diagram of a controller reset according to the embodiment of the present invention.
FIG. 8 shows a sequence diagram of an individual card reset according to the embodiment of the present invention.

### DETAILED DESCRIPTION OF THE PREFERRED EMBODIMENTS

The preferred embodiment of the present invention is described herein after referring to the charts and drawings. However, it is to be noted that the technical scope of the present invention is not limited to the embodiments described below.

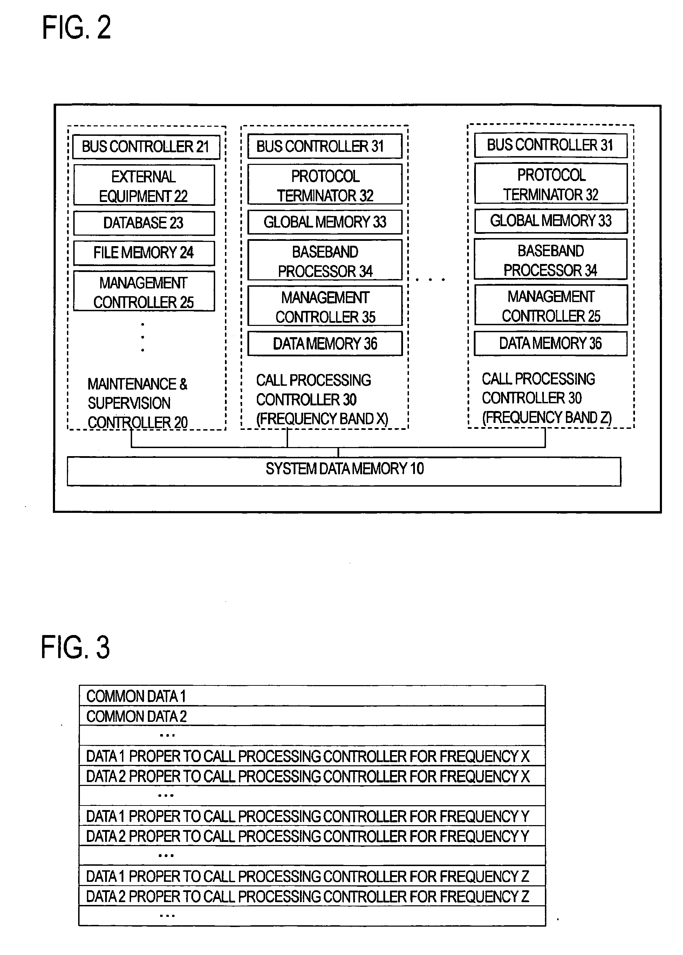

FIG. 2 shows an exemplary structure of a base station according to the embodiment of the present invention. The base station includes a system data memory 10, a maintenance supervision controller 20 and a plurality of call processing controllers 30.

The plurality of call processing controllers 30 may be provided for each of a plurality of radio frequency bands (1.7 GHz band, 2 GHz band, etc.), or the plurality of call processing controllers 30 may be provided for a single radio frequency band in case of a redundant configuration being adopted or in case of divided accommodation of subscribers.

System data memory 10 stores system data, which are basic data necessary for operating the base station, and is constituting of a nonvolatile memory.

FIG. 3 shows an exemplary structure of the system data stored in system data memory 10. The system data includes a common data common to each call processing controller and the maintenance & supervision controller, and a proper data proper to each call processing controller for each frequency band.

When a call processing controller corresponding to a new frequency band is additionally installed, upper-level apparatus updates the system data. In this case, the common data is updated, and also a proper data proper to the call processing controller for the above new frequency band is added.

The update of the common data relates to, for example, an item for recognizing the correspondence of the call processing controller operation ON/OFF to each frequency band. Assume a state of only a call processing controller for an X frequency band having been ON (in operation) until then is shifted to a state that the operation of another call processing controller for a new Y frequency band becomes also ON. Then, the common data is rewritten into the state of the call processing controller for the X frequencyband: ON, and also the state of the call processing controller for the Y frequency band: ON. In FIG. 3 shown later, an exemplary structure of the system data is shown.

Referring back to FIG. 2, maintenance & supervision controller 20 is a controller for performing maintenance and supervision of the operating state of the base station. Maintenance & supervision controller 20 is configured of a hardware unit (referred to as shelf) having function portions mounted thereon. Each function portion described below is realized as a board-type hardware unit (computer unit referred to as card). The card has a loaded computer program (software), which is executed by a CPU mounted on the card.

A bus controller 21 in maintenance & supervision controller 20 has an arbitration function of a common bus for data transmission and reception between each card mounted on maintenance & supervision controller 20. Bus controller 21 manages which card presently owns bus access right.

An external unit controller 22 controls external units accompanying the base station. Specifically, as external units, there are included a low-noise amplifier, station building facilities, and an antenna tilt controller. External unit controller 22 has interfaces for controlling the above external units. By interchanging control signals with the external units via the above interfaces, external unit controller 22 controls the external units. For example, external unit controller 22 confirms normal operation of the low-noise amplifier, confirms whether a door on the building facilities is not left open, and whether an air-conditioning unit is not out of order. Also, external unit controller 22 shifts an antenna tilt direction.

A database 23 is constituted of a memory for storing the state of call processing traffic.

A management controller 25 in maintenance & supervision controller 20 stores the call processing traffic state into database 23 according to an instruction from upper-level apparatus (operation center) which manages other function portions provided in maintenance & supervision controller 20. Also, at the time of either resetting only each call processing controller 30, or resetting on a card-by-card basis constituting call processing controller 30, management controller 25 transfers the system data to data memory 36 in call processing controller 30, as will be described later.

A file memory 24 includes a file memory for temporarily storing system data downloaded from system data memory 10, or a fault information data of the base station. According to an instruction from the upper-level apparatus (operation center), management controller 25 in maintenance & supervision controller 20 downloads the system data from system data memory 10, or uploads the fault information to the upper-level apparatus. File memory 24 temporarily keeps the above data.

Management controller 25 in maintenance & supervision controller 20 has a function of managing other function portions in maintenance & supervision controller 20, so as to perform management as the nucleus of maintenance & supervision controller 20. Further, management controller 25 performs supervision of the entire cards in the base station, report of the change of the card state to the upper-level apparatus, and execution of a control instruction from the upper-level apparatus and response thereto. As will be described later, management controller 25 collects from the entire cards the state information of each card by polling, and recognizes the reset or the reset control of each card (the reset of each card through the system reset, the controller reset, or the individual card reset).

Call processing controller 30 is a controller for controlling radio communication with a mobile communication terminal of a user. Similar to maintenance & supervision controller 20, call processing controller 30 is configured of a hardware unit (referred to as shelf) having mounted function portions stated below, each being realized as a board-type hardware unit (computer unit referred to as card).

A bus controller 31 in call processing controller 30 has an arbitration function of a common bus for performing data transmission and reception between each card mounted on call processing controller 30. Bus controller 31 manages which card presently owns bus access right.

A protocol terminator 32 extracts a specific signal from data signals transmitted from upper-level apparatus with a predetermined format, and converts a signal for transmitting to the upper-level apparatus into a predetermined format, and transmits the converted signal. Through a wired line between the base station and the upper-level apparatus, signal transmission/reception is performed using a predetermined format. According to a predetermined protocol, protocol terminator 32 extracts the specific signal from the above format. Also, according to the predetermined protocol, protocol terminator 32 converts a signal for transmission into a predetermined format.

A global memory 33 includes a memory for storing call processing information in operation. Call processing controller 30 has a redundant configuration to prevent influence upon users to a possible extent. In the redundant configuration, global memory 33 is constituted of two cards: an operating card and a standby card. The standby card works as operating card after being switched over from the operating card when the operating card becomes unable to continue services because of a failure, etc. At this time, it is necessary for the former standby card to succeed the call processing being performed in the former operating card. For this purpose, call processing information in operation is stored real time into the memory provided in the former standby card. Global memory 33 is the above memory provided in the former standby card, and is constituted of a volatile, high-speed accessible memory.

A baseband processor 34 performs baseband signal processing in the communication with a user mobile communication terminal. Between the base station and the mobile communication terminal, communication is performed by overlaying data on a high-frequency carrier wave in a radio frequency band (1.7 GHz, 2 GHz, etc .) . In contrast, inside the base station, data is extracted from a radio frequency, and the signal processing is performed after downconverting the frequency to a low frequency band. Baseband processor 34 performs the above signal processing in the base band.

A management controller 35 in call processing controller 30 includes a function of managing other function portions provided in call processing controller 30, and manages the nucleus of call processing. Also, management controller 35 in call processing controller 30 communicates with management controller 25 in maintenance & supervision controller 20. Moreover, according to an instruction from the upper-level apparatus, management controller 35 performs communication control with the mobile communication terminal.

As will be described later, a data memory 36 in call processing controller 30 stores both a common data and a proper data of a frequency band handled by the self-call processing controller 30, among the system data stored in system data memory 10. For example, data memory 36 in call processing controller 30 for an X frequency band stores both the common data and the proper data proper to the call processing controller for the X frequency band. Similarly, data memory 36 in call processing controller 30 for a Y frequency band stores both the common data and proper data proper to the call processing controller for the Y frequency band. Maintenance & supervision controller 20 transfers necessary data from system data memory 10 to data memory 36 in each call processing controller 30.

The above data memory 36 is a memory area which is not reset at the time of resetting. As will be described later, at the time of an individual card reset, the reset is performed after necessary data are read in from data memory 36, not from system data memory 10.

The system data memory is constituted of either a volatile memory capable of high-speed data transfer such as SRAM and DRAM, or a nonvolatile memory such as flash memory preventing data from being erased even at the time of power off.

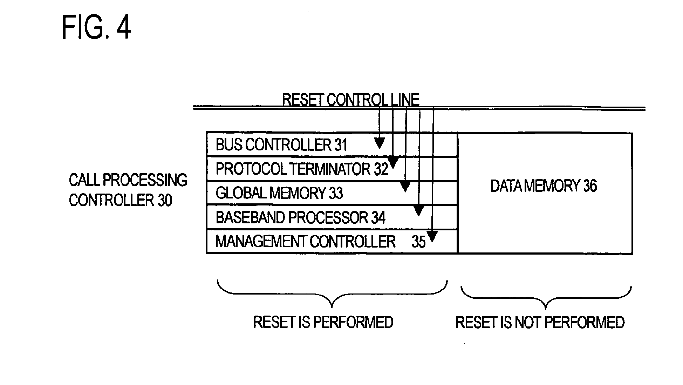

FIG. 4 shows a diagram illustrating reset control of a call processing controller 30. As shown in the figure, to bus controller 31, protocol terminator 32, global memory 33, baseband processor 34 and management controller 35, a reset signal is fed through a reset control line, which is then reset after the above function portions are reset. In contrast, the reset signal is not fed to data memory 36, and the system data stored in the data memory 36 is not erased.

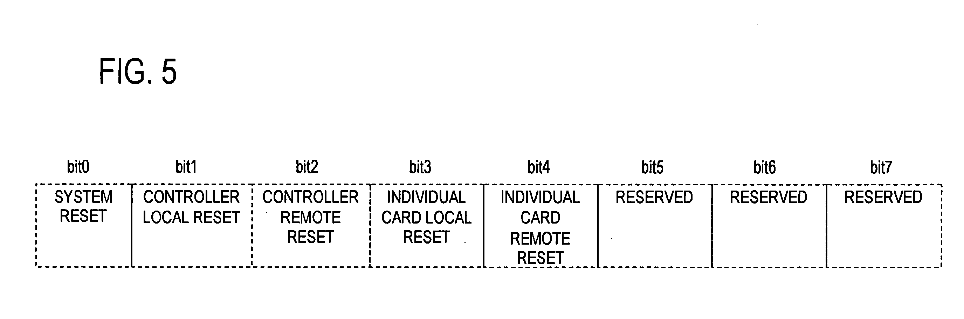

FIG. 5 shows a diagram illustrating a reset cause indication register. Each card constituting maintenance & supervision controller 20 and call processing controller 30 includes a reset cause indication register configured of hardware, as shown in FIG. 5. The reset cause indication register has, for example, an 8-bit structure. In each of the five bits therein, there are assigned: "base station reset" for resetting the overall base station; "controller local reset" for resetting on a basis of each call processing controller 30 or maintenance & supervision controller 20, which is initiated by the depression of a reset button provided on each shelf; "controller remote reset" for resetting on a basis of each call processing controller 30 or maintenance & supervision controller 20, which is initiated from a reset instruction from the upper-level apparatus; "individual card local reset" for resetting on a card-by-card basis, which is initiated by the depression of each reset button provided on each card; and "individual card remote reset" for resetting on a card-by-card basis, which is initiated from a reset instruction from the upper-level apparatus.

The reset cause indication register is not reset even when each card is reset, and each bit data therein is not erased. Accordingly, when resetting, each card is reset after the bit corresponding to a reset cause is set ON. At the time of restarting, each card recognizes the reset cause (reset type) by reading the bit data in the reset cause indication register of the card concerned. According to the reset type, each card modifies a readout location of the system data. After recognizing the reset cause, each card clears the bit data (set to OFF).

Specifically, in the case of the system reset, the common data and the proper data proper to the controller, having the card concerned as a configuration element, are read from the system data memory 10. In the case of the controller reset and the individual card reset, the common data and the proper data are read from data memory 36 inside the controller concerned.

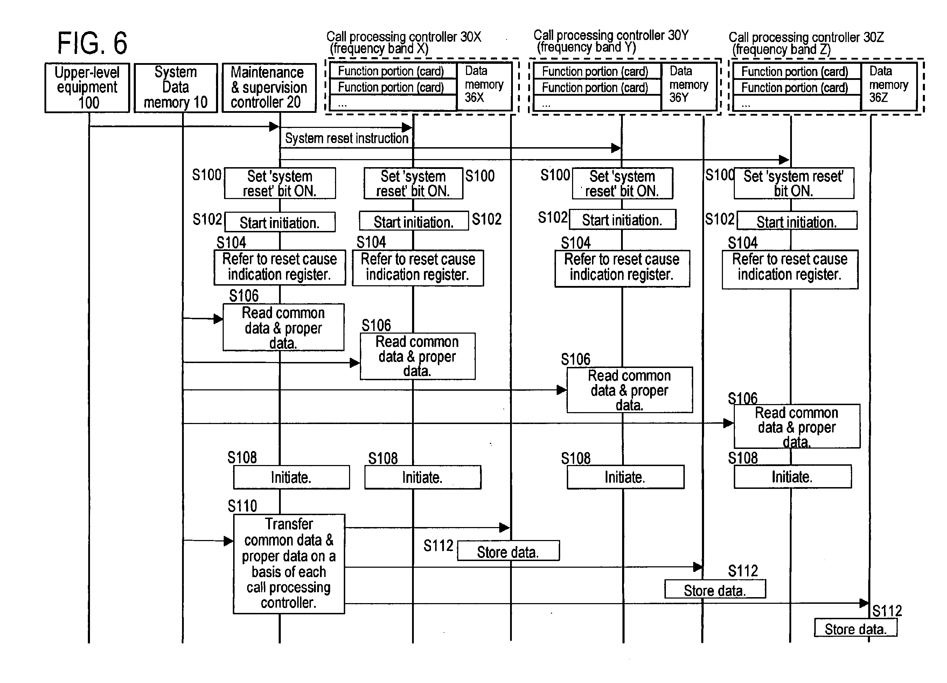

FIG. 6 shows a sequence diagram of a system reset according to the embodiment of the present invention. In each sequence diagram shown below, the base station includes a call processing controller 30X for handling a radio frequency X, a call processing controller 30Y for handling a radio frequency Y, and a call processing controller 30Z for handling a radio frequency Z, as the plurality of call processing controllers 30.

On receiving a system reset instruction from upper-level apparatus 100, management controller 25 in maintenance & supervision controller 20 transfers the system reset instruction to the entire cards provided in maintenance & supervision controller 20 and call processing controllers 30X, 30Y, 30Z. Thereby, the system reset bit in the reset cause indication register is set ON (S100).

Triggered by the system reset bit switched ON, each card in maintenance & supervision controller 20 and call processing controllers 30X, 30Y, 30Z perform resetting and start initiation (5102) . When the initiation is started, by referring to the reset cause indication register (S104), each card recognizes the system reset. Each card then accesses system data memory 10, and reads both the common data stored in system data memory 10 and the proper data proper to the controller having the card concerned as a configuration element (S106), and initiates (S108). On recognizing the reset type, each card clears the reset cause indication register.

After the initiation, management controller 25 in maintenance & supervision controller 20 receives an initiation notification from each card in each call processing controller 30. After the entire cards are initiated, management controller 25 transfers the data for call processing controller 20 stored in system data memory 10 to data memory 36 in each call processing controller 20 (S110). Then, data memory stores the received data (S112).

Specifically, management controller 25 in maintenance & supervision controller 20 transmits to call processing controller 30X both the common data and the proper data proper to call processing controller 30X, transmits to call processing controller 30Y both the common data and the proper data proper to call processing controller 30Y, and transmits to call processing controller 30Z both the common data and the proper data proper to call processing controller 30Z.

Data memory 36 in each call processing controller 25 realizes a backup function to system data memory 10. Even in the event of a failure to access system data memory 10, by accessing data memory 36 in each call processing controller 30, each card can read the common data (which may possibly be an old version before update) necessary for the initiation, as well as each proper data.

Further, even in the event of a fault in maintenance & supervision controller 20, which controls the controller reset and the individual card reset described later, by accessing data memory 36 in each call processing controller 30, each card of a reset object can read the common data (which may possibly be an old version before update) necessary for the initiation, as well as each proper data.

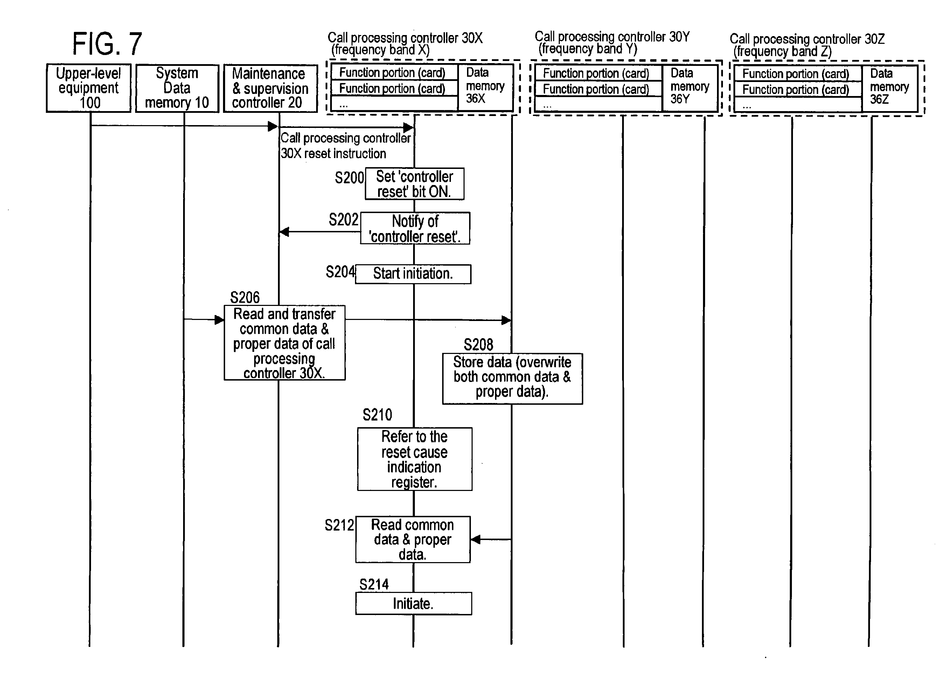

FIG. 7 shows a sequence diagram of the controller reset according to the embodiment of the present invention. In regard to the controller reset, a case of resetting one call processing controller is assumed. Hereafter, a case of resetting call processing controller 30X will be described.

By an instruction from upper-level apparatus 100 (via supervision controller 20) or the depression of a reset button provided on call processing controller 30X, a reset of call processing controller 30X is instructed. By this, a controller reset (local or remote) bit in the reset cause indication register of each card of call processing controller 30X is set ON (S200).

When the controller reset bit is set ON, each card in call processing controller 30X issues a controller reset notification to maintenance & supervision controller 20 (S202). Thereafter, each card performs the reset, and starts initiation (S204).

On receipt of the controller reset notification from call processing controller 30X, management controller 25 in maintenance & supervision controller 20 accesses system data memory 10, reads out both the common data common to call processing controllers 30 and the proper data proper to call processing controller 30X, and transfers the readout data to a data memory 36X in call processing controller 30 (S206). Data memory 36X stores the received data (S208) . By this, both the common data and the proper data proper to call processing controller 30X are updated.

Meanwhile, when the initiation is started, each card in call processing controller 30X refers to the reset cause indication register (S210). On recognizing the controller reset, the card waits for data transfer by maintenance & supervision controller 20 from the above system data memory 10 to data memory 36X of call processing controller 30X. After the lapse of a predetermined time, the card accesses data memory 36X and reads both the common data and the proper data proper to call processing controller 30X stored therein (S212), and performs initiation (S214).

In FIG. 7, the reset in call processing controller 30X is described. Here, for example, when a call processing controller 30Y for handling a frequency band Y is additionally installed in the base station having the existing call processing controller 30X for handling the frequency band X, it is necessary to reset call processing controller 30Y so as to bring call processing controller 30Y into an operable state. To complete the above reset, if the system reset is performed, maintenance & supervision controller 20 and call processing controller 30X are also reset, which produces a suspension time of the overall base station operation. Namely, the communication through the frequency band X becomes unavailable, causing inconvenience to the users.

For the above reason, in order to reset only call processing controller 30Y, the common data and the proper data proper to call processing controller 30Y are transferred from system data memory 10 to data memory 36 in call processing controller 30Y, under the control of maintenance & supervision controller 20. Call processing controller 30Y reads the common data and the proper data from data memory 36Y, and performs initiation. Thus, it is possible to perform the initiation without resetting the other call processing controller 30X.

Furthermore, a backup function can be realized by storing both the common data and the proper data for initiating the newly installed call processing controller 30Y in the internal data memory 36. Namely, even in the event that an access to system data memory 10 is disabled on the occurrence of a system reset or a fault in maintenance & supervision controller 20, by accessing data memory 36 in each call processing controller 30, each card can read the common data (which may possibly be an old version before update) necessary for the initiation, as well as eachproper data.

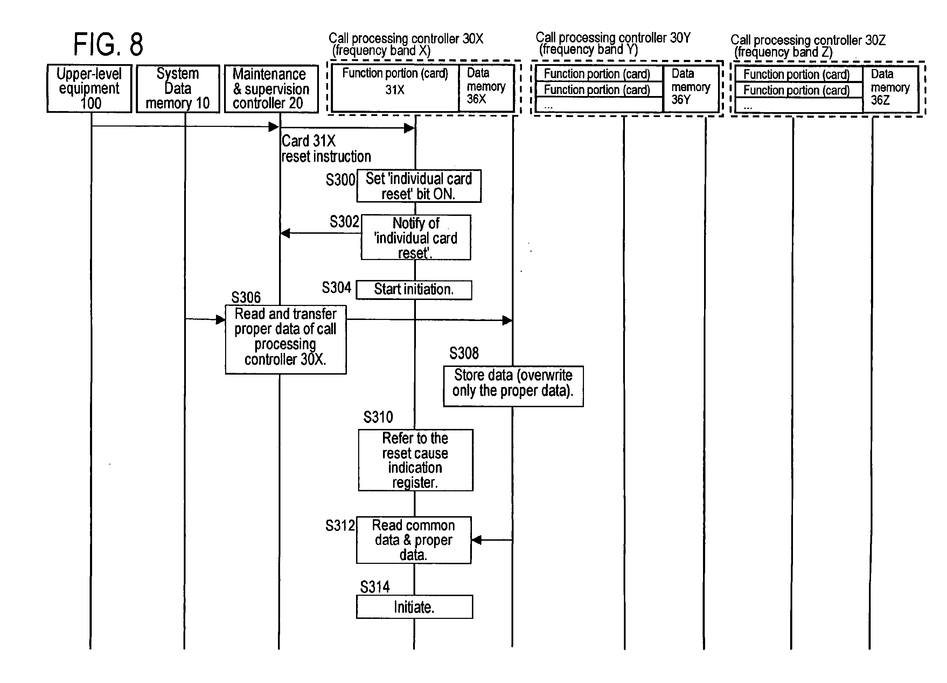

FIG. 8 shows a sequence diagram of an individual card reset according to the embodiment of the present invention. The individual card reset is assumed to be a reset of a single card among a plurality of cards constituting a call processing controller. Here, a case of resetting either one (card 31X in FIG. 8, as an example) of the cards 31X-35X constituting call processing controller 30X will be described.

By an instruction from upper-level apparatus 100 (via supervision controller 20) or the depression of a reset button provided on card 31X (bus controller 31X) of call processing controller 30X, a reset of card 31X in call processing controller 30X is instructed. By this, an individual card reset (local or remote) bit in the reset cause indication register of each card 31X is set ON (S300) .

When the individual card reset bit becomes ON, card 31X in call processing controller 30X issues an individual card reset notification to maintenance & supervision controller 20 (S302), and thereafter, performs the reset and starts initiation (S304).

On receipt of the individual card reset notification from card 31X of call processing controller 30X, management controller 25 in maintenance & supervision controller 20 accesses system data memory 10, reads out only the proper data proper to call processing controller 30X, and transfers the readout data to data memory 36X in call processing controller 30 (S306). Data memory 36X stores the received data (S308). By this, only the proper data proper to call processing controller 30X is overwritten, whereas the common data is not updated.

Meanwhile, when the initiation is started, card 31X in call processing controller 30X refers to the reset cause indication register (S310) . On recognizing the individual card reset, card 31X waits for data transfer from the above system data memory 10 to data memory 36X of call processing controller 30X. After the lapse of a predetermined time, card 31X accesses data memory 36X, and reads the common data stored therein (not updated) and the proper data proper to call processing controller 30X (S312), and performs the initiation (S314).

In case that a call processing controller 30Y for handling a new frequency band Y is additionally installed prior to the reset of card 31X, the common data stored in system data memory 10 is updated when call processing controller 30Y is installed.

When resetting card 31X, if card 31X accesses system data memory 10, card 31X reads the updated common data. Then, since cards other than the reset card in call processing controller 30X have read the common data before the update, different common data become existent in call processing controller 30X, causing malfunction or incorrect operation.

According to the reset on a card-by-card basis in the present invention, under the control of maintenance & supervision controller 20, only the proper data proper to call processing controller 30X is transferred to data memory 36 in call processing controller 30X without reading the common data from system data memory 10. Therefore, the common data in data memory 36 of call processing controller 30X is left intact without being updated. Further, since card 31X performs initiation after reading the common data and the proper data from data memory 36, the identical common data to the common data for other cards can be read in. Thus, malfunction and a failure of call processing controller 30 can be prevented.

The foregoing description of the embodiments is not intended to limit the invention to the one details of the examples illustrated. Any suitable modification and equivalents may be resorted to the scope of the invention. All features and advantages of the invention which fall within the scope of the invention are covered by the appended claims.

## Claims

1. Radio base station apparatus comprising:
a plurality of call processing controllers performing call processing control;
a supervision controller supervising the call processing controllers; and
a system data memory storing system data necessary for restarting,
each call processing controller further comprising:
a plurality of function portions; and
a memory storing data necessary for restarting the plurality of function portions,
wherein one function portion of one call processing controller comprises a reset type recorder recording a reset type indicative of resetting the overall radio base station apparatus, or resetting only the one call processing controller, or resetting only the one function portion in the one call processing controller, and
wherein, depending on the reset type recorded in the reset type recorder, the one function portion restarts by reading out necessary data for restarting from either the system data memory or the memory in the one call processing controller.

2. The radio base station apparatus according to claim 1,
wherein the reset type recorder is not reset in any reset case.

3. The radio base station apparatus according to claim 1,
wherein the memory in each call processing controller is not reset in any reset case.

4. The radio base station apparatus according to claim 1,
wherein, when the overall radio base station apparatus is reset, after the reset is performed, the one function portion reads out the necessary data for restarting from among the system data stored in the system data memory, and performs restarting, and
wherein the supervision controller reads out the necessary data for restarting the one function portion from among the system data stored in the system data memory, so as to transfer and store into the memory of the one call processing controller.

5. The radio base station apparatus according to claim 4,
wherein the necessary data for restarting the one function portion are a common data common to each call processing controller and a proper data proper to the one call processing controller, among the system data stored in the system data memory.

6. The radio base station apparatus according to claim 1,
wherein, when resetting only the one call processing controller, the supervision controller reads out the necessary data for restarting the one call processing controller, from the system data stored in the system data memory, so as to transfer and store into the memory of the one call processing controller, and thereafter, each function portion in the one call processing controller reads out the data stored in the memory and performs restarting.

7. The radio base station apparatus according to claim 6,
wherein the necessary data for restarting the one function portion are a common data common to each call processing controller and a proper data proper to the one call processing controller, among the system data stored in the system data memory.

8. The radio base station apparatus according to claim 1,
wherein, when resetting only the one function portion, the supervision controller reads out the necessary data for restarting the one function portion, from the system data stored in the system data memory, so as to transfer and store into the memory of the one call processing controller, and thereafter, the one function portion reads out the data stored in the memory and performs restarting.

9. The radio base station apparatus according to claim 8,
wherein the necessary data for restarting the one function portion is a proper data proper to the one call processing controller among the system data stored in the system data memory.
